# EUROPEAN PATENT APPLICATION

(11) **EP 2 071 687 A1**
(43) Date of publication of application: **17.06.2009**
(21) Application number: 07023853.0
(22) Date of filing: 10.12.2007
(51) Int. Cl.: H02B 13/075

(54) **Medium-voltage or high-voltage switchgear assembly**

(71) Applicant: ABB Technology AG, 8050 Zürich (CH)
(72) Inventor: Cereda, Carlo, 24043 Caravaggio (BG) (IT); Donzel, Lise, Dr., 5430 Wettingen (CH); Kaltenegger, Kurt, Dr., 5333 Baldingen AG (CH); Reuber, Christian, Dr.-Ing., 40880 Ratingen (DE); Roseen, Patrick, Dr., 724 63 Västeras (SE); Valdemarsson, Stefan, 513 98 Lidköping (SE)
(74) Representative: Schmidt, Karl Michael

(57) **Abstract**

Medium-voltage or high-voltage switchgear assembly according to the preamble of patent claim 1. In order in this case to achieve the situation whereby a housing can be very largely dispensed with, and, moreover, a better ability to prefabricate the switchgear assembly arises, it is proposed according to the invention that said components of the switchgear assembly are additionally provided with an electrically conductive surface coating in their entirety or only on their surfaces provided with insulation material, and these respective coatings of the respective components in a switchgear assembly are grounded to the same electrical ground potential.

## Description

The invention relates to a medium-voltage or high-voltage switchgear assembly according to the preamble of patent claim 1.

Medium voltage switchgear assemblies are generally accommodated in housings or switching cabinets. These can in this case be filled with special gases, depending on application. The housing is electrically grounded in this case to ground potential.

Handling the gases used, for example SF₆, is complicated.

It is therefore the object of the invention to develop a medium-voltage or high-voltage switchgear assembly to the effect that it is possible to dispense as far as possible with a housing and, moreover, a better ability to prefabricate the switchgear assembly results.

In the case of a medium-voltage or high-voltage switchgear assembly of the generic type, the object set is achieved according to the invention by the characterizing features of claim 1.

Further advantageous refinements are specified in the dependent claims.

The core of the invention is that said components of the switchgear assembly are additionally provided with an electrically conductive surface coating in their entirety or only on their surfaces provided with insulation material, and these respective coatings of the respective components in a switchgear assembly are grounded to the same electrical ground potential. It follows that a grounded housing is superfluous overall. Above all, all parts thus grounded are also located at the same ground potential.

It is specified in an advantageous refinement that the electrically conductive surface coating consists of a metal film.

It is provided in a further refinement that the electrically conductive surface coating consists of a film of semiconductor material. In this special case in combination with claim 3, the surface coating therefore has a type of varistor property that produces a short circuit to ground potential only starting from a specific electrical voltage.

In an advantageous refinement, it is specified that the switchgear assembly, that is to say the components of the switchgear assembly, is mounted on a frame without a housing, that is to say without a switching cabinet. Overall grounding to the same, even more to the identical ground potential is possible, in turn, via the frame. A closed housing is rendered superfluous.

In an advantageous refinement, the frame lies at the same electrical ground potential, as already specified.

In an advantageous refinement, it is specified that the interconnection of the grounded parts, that is to say the grounding of the electrically conductive coatings is undertaken via the fixing/screwing of the components onto a grounded base in such a way that the conductive surface on the connecting/fixing surface has an electrically conductive contact with a component lying at ground potential. That is to say, the components are screwed onto one another or onto the frame or a likewise grounded component such that the electrically conductive layer extends as far as into the bearing surface such that an electrical connection between ground and electrically conductive layer results by mechanical fastening.

In an advantageous refinement, it is provided that the electrically conductive surfaces or surface parts are provided with metal connecting lugs that are fitted thereon and can make contact with the ground potential. It is possible in this way also to make contact with the electrically conductive coating separately by connecting the connecting lug to ground potential.

In an advantageous refinement, it is specified that the geometric dimensions of said parts are standardized in such a way that different switchgear assemblies can be fashioned from geometrically similarly prefabricated parts.

In an advantageous refinement, it is specified that the cable connections to the busbars are provided at least partially with insulation material that is electrically conductively coated in the way configured according to the previous claims, and this coating is likewise grounded.

In an advantageous refinement, it is specified that the geometric dimensions of the cable connectors and couplings in all spatial directions is an integral multiple of a basic grid measure, the basic grid measure being the 1/1st of the 1/nth part of the standardized measure between the connection pieces of a pole part. Owing to the geometry thus stipulated, the prefabricated parts can be juxtaposed in an accurately fitting fashion without the need to provide mechanical compensating components to overcome mechanical misfitting.

In an advantageous refinement, it is specified that the switchgear assembly is an indoor switchgear assembly. The reduction of the switchgear assembly arrangement to merely an open frame is possible in the simplest way hereby.

The invention is illustrated in the drawing and described in more detail below.

In the drawing:
figure 1 shows a pole part,
figure 2 shows a busbar piece,
figure 3 shows a disconnecting and grounding switch,
figure 4 shows a cable connector,
figure 5 shows a three-phase switchgear, and

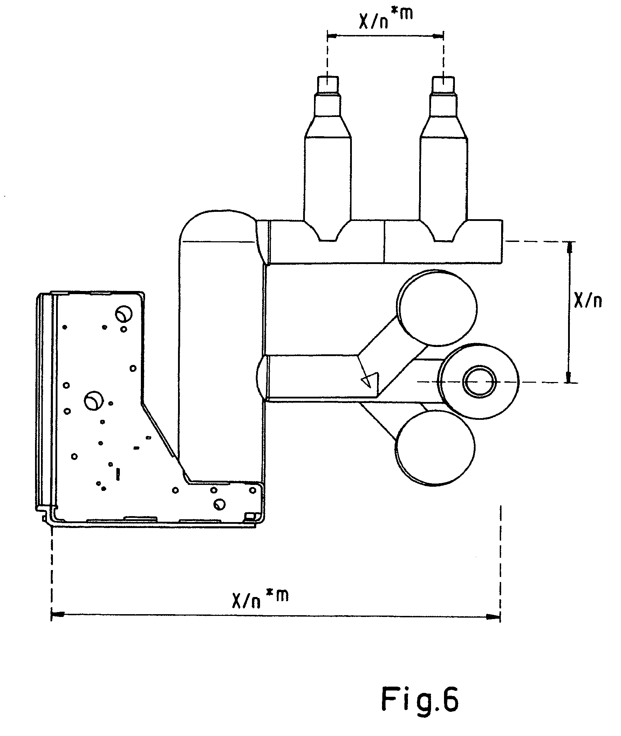

figure 6 shows a modular design.

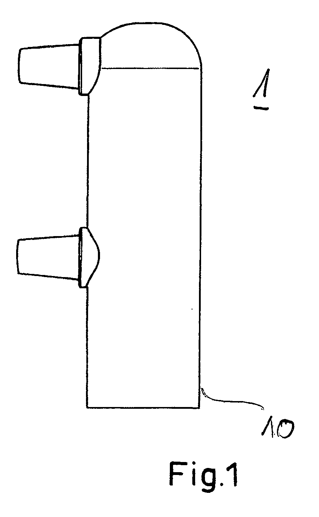

Figure 1 shows a first embodiment in the case of which an encapsulated pole part with an internal vacuum interrupter chamber is shown. The resulting insulation of the pole part is achieved by an encapsulation. According to the invention, the effective outer surface of the encapsulation is now further provided with an electrically conductive coating 10. The latter is then connected to ground potential during assembly. The electrical connection to ground potential can be performed in this case such that the conductive coating is simply applied firmly as far as around the bottom side of the pole part such that, when the pole part is screwed on, the electrical connection to ground potential is undertaken, as it were, in the same step as the fastening itself.

A further possibility consists in fitting a contacting lug that is firmly conductively connected to the coating and then connected separately to ground potential.

This method is valid for all parts in the switchgear assembly that are coated in this way.

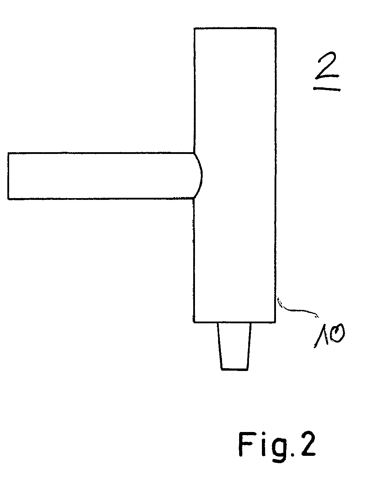

Figure 2 shows a part of a busbar that is likewise provided with/encapsulated in an insulation material. Exactly the same as was described in figure 1 applies here. The surface of the insulation is likewise coated here in an electrically conductive fashion. There, as well, the coating can be performed in the same manner as in figure 1 up to contact surfaces with other components lying at ground potential such that the electrical interconnection also takes places simultaneously upon mechanical fastening.

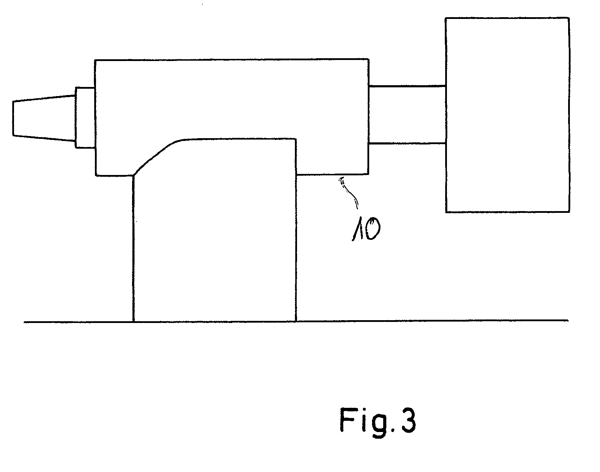

Figure 3 shows a disconnecting and earthing switch to which what has been said likewise applies.

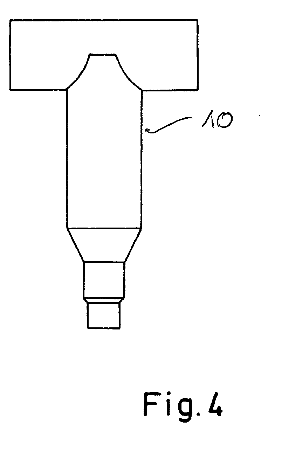

Figure 4 shows a cable connector, likewise with an insulation region to which the same applies as set forth above.

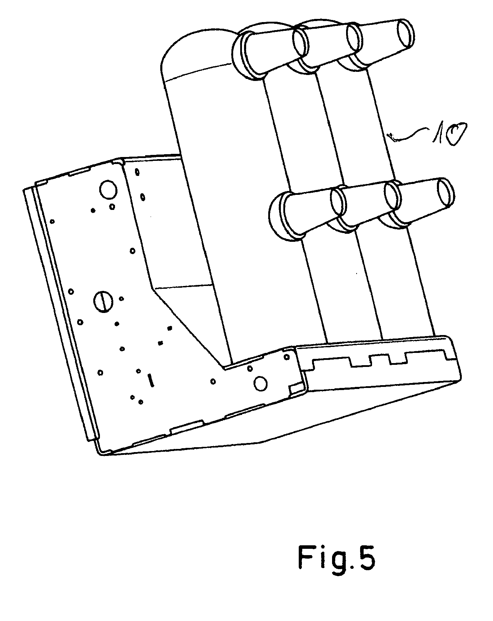

Figure 5 shows a switchgear as it is used in a switchgear assembly. Here, 3 pole parts, one for each phase, are mounted on a drive housing that actuates the moving switching contacts. The metallic housing is at electrical ground potential. The pole parts are fastened as described in figure 1, and therefore also earth the coatings on the pole parts at the same ground potential.

The connection centerline spacing, which is yielded from the spacing of the connections of the pole part as in figure 1 is a standardized measure here. In the essence of the invention, this measure for the geometric dimensions of the remaining components of a switchgear assembly is conceived such that as a 1/1st or a 1/nth part this connection centerline spacing is regarded as a so-called basic grid measure such that every geometric dimension is an integral multiple of this measure.

Let us thus assume that this contact centerline spacing is X.

It follows that the basic grid measure is either X or X/n, "n" being integral and greater than or equal to 1.

Every other component measure is then in this case fixed geometrically at m*X/n, at least on the mechanical fastening interface, "m" also being integral and greater than or equal to 1.

This yields an interconnection capability in which each module or each component fits the other without a mechanical adapter.
A modular principle is thus fulfilled, and so the switchgear assembly can be simply fashioned.

With the aid of the coating according to the invention, there is no further need for a housing around the elements of the switchgear assembly, it is enough, instead, to have a frame on which the components of a switchgear assembly are fastened. All the parts are provided with the grounding according to the invention, and a grounded switching cabinet is therefore superfluous.

Reference numerals:
- 1.: Pole part
- 2.: Busbar coupling
- 3.: Disconnecting and grounding switch
- 4.: Cable connector
- 5.: Switchgear
- 10.: conductive coating

## Claims

1. A medium-voltage or high-voltage switchgear assembly having pole parts, insulators, busbar joints/couplings, and cable connectors, as well as switchgear, wherein said components (1, 2, 3, 4, 5) of the switchgear assembly are additionally provided with an electrically conductive surface coating in their entirety or only on their surfaces provided with insulation material, and these respective coatings of the respective components in a switchgear assembly are grounded to the same electrical ground potential.

2. The medium-voltage or high-voltage switchgear assembly as claimed in claim 1, wherein the electrically conductive surface coating consists of a metal film.

3. The medium-voltage or high-voltage switchgear assembly as claimed in claim 1, wherein the electrically conductive surface coating consists of a film of semiconductor material.

4. The medium-voltage or high-voltage switchgear assembly as claimed in claim 1, 2 or 3, wherein the switchgear assembly, that is to say the components (1, 2, 3, 4, 5) of the switchgear assembly, is mounted on a frame without a housing, that is to say without a switching cabinet.

5. The medium-voltage or high-voltage switchgear assembly as claimed in claim 4, wherein the frame lies at the same electrical ground potential.

6. The medium-voltage or high-voltage switchgear assembly as claimed in one of claims 1 to 5, wherein the interconnection of the grounded parts, that is to say the grounding of the electrically conductive coatings is undertaken via the fixing/screwing of the components onto a grounded base in such a way that the conductive surface on the connecting/fixing surface has an electrically conductive contact with a component lying at ground potential.

7. The medium-voltage or high-voltage switchgear assembly as claimed in one of claims 1 to 5, wherein the electrically conductive surfaces or surface parts are provided with metal connecting lugs that are fitted thereon and can make contact with the ground potential.

8. The medium-voltage or high-voltage switchgear assembly as claimed in one of the preceding claims, wherein the geometric dimensions of said parts are standardized in such a way that different switchgear assemblies can be fashioned from geometrically similarly prefabricated parts.

9. The medium-voltage or high-voltage switchgear assembly as claimed in claim 8, wherein the cable connections to the busbars are provided at least partially with insulation material that is electrically conductively coated in the way configured according to the previous claims, and this coating is likewise grounded.

10. The medium-voltage or high-voltage switchgear assembly as claimed in one of the preceding claims, wherein the geometric dimensions of the cable connectors and couplings in all spatial directions are an integral multiple of a basic grid measure, the basic grid measure being the 1/1st or the 1/nth part of the standardized measure between the connection pieces of a pole part.

11. The medium-voltage or high-voltage switchgear assembly as claimed in one of the preceding claims, wherein the switchgear assembly is an indoor switchgear assembly.
